# EUROPÄISCHE PATENTSCHRIFT

(11) **EP 2 594 354 B1**
(45) Veröffentlichungstag und Bekanntmachung des Hinweises auf die Patenterteilung: **23.08.2017**
(21) Anmeldenummer: 12007584.1
(22) Anmeldetag: 08.11.2012
(51) Int. Cl.: B23D 49/16

(54) **Stichsäge**
Jig saw
Scie sauteuse

(30) Priorität: 16.11.2011 DE 102011118653
(43) Veröffentlichungstag der Anmeldung: 22.05.2013
(73) Patentinhaber: Scheppach Fabrikation von Holzbearbeitungsmaschinen GmbH, 89335 Ichenhausen (DE)
(72) Erfinder: Hartmann, Werner, 86356 Neusäß (DE)
(74) Vertreter: Munk, Ludwig

(56) Entgegenhaltungen:
- DE-A1-102008 057 031
- DE-A1-102009 029 426
- DE-U1- 29 506 017
- GB-A- 2 417 008
- US-A- 4 016 649
- US-B1- 6 488 256

## Beschreibung

Die Erfindung betrifft eine Stichsäge gemäß dem Oberbegriff des Anspruchs 1. Eine solche Stichsäge ist der GB2417008 zu entnehmen. Es gibt Lösungen, um beim Sägen mit Stichsägen besser in die Ecken zu kommen bzw. ein Werkstück bis nahe an eine vertikal zur durchzusägenden Oberfläche verlaufende Wand heran bearbeiten zu können. Um zu Verhindern, dass das Gehäuse der Stichsäge, das gewöhnlich nach vorne über das Sägeblatt bzw. die Sägeebene übersteht, an der vertikal verlaufenden Wand anschlägt und damit ein Sägen bis zu dieser Wand unmöglich macht, ist in der deutschen Patentschrift DE 198 17 656 B4 eine Stichsäge vorgeschlagen worden, bei der das Sägeblatt am Vorderende des Gehäuse mit nach vorne weisendem Sägeblatt eingespannt wird und das Vorderende des Gehäuses gegenüber einem auf dem Werkstück ruhenden Schuh angehoben werden kann, so dass das Vorderende des Gehäuses gegenüber der Sägeklinge zurückversetzt wird und man somit mit zur Vertikalen geneigtem Sägeblatt näher an die Vertikalwand heransägen kann, weil das Vorderende des Gehäuses aus dem Weg ist.

Eine andere Stichsäge, mit der man einen Schrägschnitt mit einem gegenüber der Vertikalen relativ wenig angestellten Sägeblatt durchführen kann, ist dem deutschen Gebrauchsmuster DE 295 06 017 U1 zu entnehmen. Dabei ist ebenfalls eine Bodenplatte vorgesehen, an der die Stichsäge um eine horizontale Achse angelenkt ist. Um die Stichsäge mit zur Vertikalen schräggestelltem, aber in seiner Stellung fixiertem Sägeblatt über das Werkstück führen zu können ist dort ein Fußkeil zwischen der Bodenplatte und dem Gehäuse der Stichsäge vorgesehen.

Wenn man dagegen mittels einer Handstichsäge einen Ausschnitt aus dem Vollen sägen wollte, z.B. für ein Spülbecken aus einer Küchenarbeitsplatte, wurde bisher zunächst ein Loch in die Arbeitsplatte gebohrt, dann das Stichsägeblatt durch dieses Loch geführt und anschließend das Loch ausgesägt.

Besonders hastige Handwerker haben dabei schon bisher zur Vermeidung des zusätzlichen Arbeitsgangs "Loch Bohren" die Stichsäge mit nahezu horizontal geneigtem Sägeblatt an die Platte von oben angesetzt und dann in einer Schwenkbewegung sich ins Material hinein arbeiten lassen, bis das Sägeblatt wieder senkrecht steht und dann entlang der gewünschten Schnittline geführt werden kann. Diese Vorgehensweise erfordert jedoch ein gewisses Können, wobei die erzielbare Schnittqualität trotzdem eher mäßig ist, aber z.B. für den Messebau oder ähnliche Anwendungen, wo etwas nur ein paar Tage halten muss, ausreichend.

Ferner sind schon "selbststartende" Sägeblätter mit einem gekrümmten Verlauf der verzahnten Klinge bekannt, die parallel zur Werkstückoberfläche angesetzt werden können, siehe beispielsweise die US-Patentschrift US 5,119,708. Eine Hubsäge, bei der ein ähnliches Sägeblatt mit einer bogenförmigen Sägeklinge nach Art einer Stichsäge hin- und her oszilliert wird, ist ferner der deutschen Patentanmeldung DE 199 50 157 A1 zu entnehmen. Das dort gezeigte Werkzeug ist aber nicht dafür ausgelegt, dass das Sägeblatt wie bei einer Stichsäge bei der Durchführung eines Schnitts vertikal zur Werkstückoberfläche gehalten werden kann, sondern nur dafür, dass es mit zur Werkstückoberfläche parallelem oder nahezu parallelen Sägeblattrücken am Werkstück angesetzt wird. Damit eignet sich das Werkzeug nur für geringe Werkstückdicken. Außerdem erfolgt der Schnitt auch hier vollständig freihändig, also ungeführt.

Um als Handwerkzeug ausgebildete Stichsägen oder Kreissägen beim Sägen zu führen sind andererseits tischseitig befestigbare Führungsschienen bekannt, auf die die Stichsäge bzw. Kreissäge über eine an der Stichsäge bzw. Kreissäge befestigte Adapterplatte aufgesetzt werden kann. Die Handsäge ist dann beim Schnitt entlang der Führungsschiene gerade geführt, so dass ein exakter Schnitt ausgeführt werden kann. Eine Hand-Kreissäge dieser Art ist beispielsweise der deutschen Patentanmeldung DE 10 2007 010 249 A1 zu entnehmen.

Darauf aufbauend ist in der deutschen Patentanmeldung DE 10 2008 057 031 A1 schon eine Stichsäge vorgeschlagen worden, die über eine die Säge um eine in etwa auf der vertikalen Linie des Sägeblatts liegende Drehachse schwenkende Schwenkeinrichtung an der Adapterplatte schwenkbar aufgenommen ist.

Die vorstehend beschriebene Einschwenkbewegung kann damit als geführte Bewegung ausgeführt werden, so dass sich ein wesentlich sauberes Schnittbild ergibt. Um das Sägeblatt aus einer nahezu horizontalen Ansatzstellung in die vertikale Sägestellung einzuschwenken muss die Säge gleichzeitig angehoben werden, so dass die vorderseitige Unterkante des Sägegehäuses beim Verschwenken nicht an der Oberfläche des Werkstücks aufsitzt und das Sägeblatt in der Ansatzstellung stark genug geneigt zum Ansatz an das Werkstück gebracht werden kann, so dass sich das Sägeblatt auch in das Material einarbeitet. Hiervon ausgehend ist es Aufgabe der vorliegenden Erfindung, eine Stichsäge, sowie eine Stichsägen-Linearführungsanordnung mit einer solchen Stichsäge und einer solchen Halteplatte zu schaffen, bei denen das Einschwenken der Stichsäge vereinfacht wird.

Diese Aufgabe wird bezüglich der Stichsäge durch die Merkmale des Anspruchs 1 gelöst. Bei einer Stichsäge mit einem auf einer Bodenplatte aufgebauten Antriebsaggregat, von dem ein hin- und her bewegbares Sägeblatt nach unten und in einem von der Bodenplatte mehrseitig umschlossenen Bereich durch die Bodenplatte hindurch geführt ist, welche zum Eintauchen des Sägeblatts ins Material aus einer Stellung mit nahezu horizontal geneigtem Sägeblatt in einer geführten Schwenkbewegung unter Hineinarbeiten ins Material geeignet ist, weist die Bodenplatte an ihrer in Schnittrichtung gelegenen Vorderseite erfindungsgemäß einen Scharnierabschnitt auf, mit welchem die Stichsäge scharnierartig mit Drehfreiheitsgrad um eine horizontale und quer zur Schnittrichtung verlaufende Schwenkachse mit einem für die Stichsäge vorgesehenen Halter verbindbar ist. Als Halter für die Stichsäge dient eine Halteplatte, welche eine Ausnehmung aufweist, in die die Bodenplatte der Stichsäge passt. Die Halteplatte weist erfindungsgemäß an ihrem in Schnittrichtung vorne gelegenen Bereich einen Gegenscharnierabschnitt auf, an dem die Stichsäge mit ihrem Scharnierabschnitt scharnierartig mit Drehfreiheitsgrad um eine horizontale und quer zur Schnittrichtung verlaufende Schwenkachse mit der Halteplatte verbindbar ist. Für das Ausführen der Eintauchbewegung weist die Stichsäge einen Handgriff bzw. einen per Hand greifbaren Gehäuseabschnitt auf und der Halter bzw. die Halteplatte einen Handgriff und/oder eine Befestigungseinrichtung zur tischseitigen Fixierung.

Dadurch, dass der Scharnierabschnitt am vorderen Ende der Bodenplatte vorgesehen ist gelingt ein Ausführen der Schwenkbewegung ohne dass eine gleichzeitige Hubbewegung nötig wäre. Denn im unterhalb und vor der Schwenkachse liegenden Sektor ist kein oder nur wenig Material, welches die Schwenkbewegung behindern könnte. Falls nötig könnte die Bodenplatte der Stichsäge an ihrer Vorderkante abgerundet oder angefast sein. Es wäre auch denkbar, die Schwenkachse so hoch zu legen, dass die Bodenplatte vorne nicht ganz aufliegt.

Als Halter für eine solche Stichsäge dient eine Halteplatte, welche eine Ausnehmung aufweist, in die die Bodenplatte der Stichsäge passt. Die Halteplatte weist erfindungsgemäß an ihrem in Schnittrichtung vorne gelegenen Bereich einen Gegenscharnierabschnitt auf, an dem die Stichsäge mit ihrem Scharnierabschnitt scharnierartig mit Drehfreiheitsgrad um eine horizontale und quer zur Schnittrichtung verlaufende Schwenkachse mit der Halteplatte verbindbar ist. Ist als Schwenkachse ein Schwenkbolzen vorgesehen, welcher an der Bodenplatte der Stichsäge in die dortigen Gelenkaugen eingesteckt werden kann, kann auch die Halteplatte in ihrem vorderen Bereich auf einer fluchtenden Linie zu den Gelenkaugen der Bodenplatte entsprechende Gelenkaugen aufweisen. Der Schwenkbolzen kann dabei an seinem freien Ende einen Gewindebolzenabschnitt aufweisen, und eines der Gelenkaugen an der Halteplatte ein zugeordnetes Innengewinde. An der anderen Seite des Schwenkbolzens kann ein Handgriff zum Einschrauben vorgesehen sein.

Bei einer Stichsägen-Linearführungsanordnung mit einer auf ein zu sägendes Werkstück auflegbaren Führungsschiene und einer auf der Führungsschiene geführt aufgenommene Adapterplatte kann die erfindungsgemäße Halteplatte an der erfindungsgemäßen Stichsäge vorgesehen sein, wobei die Halteplatte und die Adapterplatte zur Befestigung aneinander ausgebildet sind.

Soll nun lediglich ein von einer Werkstückkante ausgehender, ungeführter Schnitt ausgeführt werden, kann die Stichsäge alleine ohne Montage an der Halteplatte auf herkömmliche Art verwendet werden, also ohne Einschwenkbewegung an der Werkstückkante angesetzt werden. Soll dagegen in dem Werkstück ein Ausschnitt aus dem Vollen erfolgen, kann die Stichsäge mit ihrem Scharnierabschnitt an dem Gegenscharnierabschnitt der Halteplatte befestigt werden. Nach dem Einschwenken bzw. Eintauchen der Stichsäge kann der anschließende Schnitt freihändig bei an der Halteplatte montierter Stichsäge oder nach Abnehmen der Stichsäge von der Halteplatte erfolgen.

Die Stichsäge ist dabei während der Einschwenkbewegung über die auf dem Werkstück aufliegende Halteplatte geführt, bis das Sägeblatt seine vertikale Sägestellung erreicht und der anschließende Schnitt ausgeführt wird.

In vielen Fällen reicht es dabei aus, wenn die Stichsäge und gegebenenfalls die Halteplatte während der Einschwenkbewegung per Hand an der gewünschten Stelle auf dem Werkstück fixiert werden. Für diesen Anwendungsfall weist die Stichsäge und die Halteplatte einen Handgriff bzw. einen per Hand greifbaren Gehäuseabschnitt auf. Die Halteplatte kann aber auch eine Befestigungseinrichtung zur Befestigung des Halters und damit der Stichsäge an dem Werkstück oder einem Werktisch aufweisen oder per Schraubzwinge oder dergleichen während der Einschwenkbewegung am Werkstück befestigt werden.

Ist nicht nur eine Führung der Stichsäge während der Schwenkbewegung gefragt, sondern auch eine Führung der Stichsäge beim auf die Schwenkbewegung folgenden oder ohne Schwenkbewegung vorab ausgeführten geraden Schnitt entlang einer vorgegebenen Schnittlinie, wird die Stichsägen-Linearführungsanordnung eingesetzt, bei der die Halteplatte auf einer Führungsschiene geführt aufgenommen ist, vorzugsweise an einer auf der Führungsschiene geführt aufgenommenen Adapterplatte befestigt ist. Vorteilhaft ist es dabei, wenn die Lage der Halteplatte zur Adapterplatte quer zur Schnittrichtung einstellbar ist, so dass beim Aufsetzen und gegebenfalls Befestigen der Führungsschiene auf dem Werkstück nur ungefähr auf die gewünschte Lage der Schnittlinie geachtet werden muss, während die Feineinstellung dann per Querverschiebung der Halteplatte gegenüber der Adapterplatte erfolgt.

Zur sicheren Montage der Stichsäge auf der Halteplatte kann die Bodenplatte der Stichsäge an ihrer in Schnittrichtung gelegenen Rückseite zweckmäßig oben eine randseitige Riegelaufnahmenut für einen an dem Halter bzw. der Halteplatte vorgesehen Riegel aufweisen und die Halteplatte an ihrer Rückseite einen oberseitig angebrachten Riegel, der in Schnittrichtung bewegbar und dadurch in und außer Eingriff mit der Riegelaufnahmenut bringbar ist.

An der Führungsschiene können dabei die Bewegung der Adapterplatte in oder entgegen der Schnittrichtung verhindernde, aufsteck oder schraubbare Stopperelemente vorgesehen sein, die im aufgeschraubten Zustand vorne und/oder hinten an der Adapterplatte anliegen. Dadurch kann ein Rückschlagen oder ein plötzlicher Vorschub während der Einschwenkbewegung wirkungsvoll verhindert werden.

Vorteilhaft im Sinne eines möglichst horizontal ansetzbaren Sägeblatts ist es dabei, wenn die Schwenkachse auf oder nur knapp vor der Schnittlinie des Sägeblatts angeordnet ist. Dies ist aber aus praktischen Gründen oft nicht möglich. In einer aus Kosten- und Montagegründen vorteilhaften Weiterbildung der erfindungsgemäßen Stichsäge ist z.B. als Schwenkachse ein Schwenkbolzen vorgesehen, welcher in als Scharnierabschnitt dienende Gelenkaugen auf der Bodenplatte einschiebbar ist. Dieser Bolzen würde sonst mit dem Sägeblatt kollidieren. Zum Ausgleich könnte das Sägeblatt unter einem Winkel zur Vertikalen angestellt und in dieser Richtung hin und her bewegbar in dem Antriebsaggregat aufgenommen sein oder in eine solche Stellung verschwenkbar. Vorteilhaft weist das Sägeblatt jedoch nach Art eines bei Tisch verwendeten Frühstücksmessers eine ausgebauchte Form auf, d.h., die Sägezähne sind entlang einer konvexen Ausbauchung angeordnet, so dass in der verschwenkten Stellung der Stichsäge auch dann ein Sägeblattbereich horizontal oder nahezu horizontal an dem Werkstück angreift, wenn das Sägeblatt insgesamt nicht völlig horizontal aufliegt.

Weitere vorteilhafte Weiterbildungen der Erfindung werden anhand der in den beiliegenden Figuren dargestellten Ausführungsformen näher erläutert. Es zeigen:
- Figur 1: eine Stichsägen-Linearführungsanordnung mit abgeschwenkter Stichsäge in perspektivischer Darstellung; und
- Figur 2: die in der Figur 1 dargestellte Stichsägen-Linearführungsanordnung bei in Sägestellung eingeschwenkter Stichsäge;

In den Figuren ist eine insgesamt mit 1 bezeichnete Stichsäge gezeigt, welche um eine horizontale und quer zur Schnittrichtung verlaufende Achse schwenkbar an einer insgesamt mit 5 bezeichneten Halteplatte befestigt ist. Die Halteplatte 5 ist wiederum an ihrer Seitenkante mit einer auf einer Führungsschiene 13 geführt aufgenommenen Adapterplatte 12 verbunden.

Die Führungsschiene 13 kann beispielsweise mit einer Schraubzwinge an einem auf einem Werktisch aufliegenden Brett befestigt werden oder dort nur aufgelegt sein, um die Säge während eines Schnitts zu führen. Die Stichsäge 1 zeigt dabei einen bis auf einen aus zwei Gelenkaugenabschnitten 9, 10 bestehenden Scharnierabschnitt 9, 10 einen gängigen Aufbau auf und kann auch als Handwerkzeug zum freien Sägen ohne die restlichen Bauteile der Stichsägen-Linearführungsanordnung verwendet werden. Dabei ist ein Antriebsaggregat 2 der Stichsäge 1 für Gehrungsschnitte um eine horizontale und in Schnittrichtung verlaufende Achse schwenkbar auf einer Bodenplatte 2 aufgebaut. Die Bodenplatte 2 umgibt dabei U-förmig einen Bereich, in dem ein vom Antriebsaggregat 3 nach unten abstehendes Sägeblatt 4 die Bodenebene der Bodenplatte durchdringt. An den beiden freien Enden der nach vorne zeigenden Schenkeln der Bodenplatte sind dabei die Gelenkaugenabschnitte 9, 10 ausgebildet, welche dazu dienen, die Stichsäge 1 schwenkbar mit der Halteplatte 5 zu verbinden, um die Stichsäge 1 beim Sägen ins Volle ohne Vorbohren geführt aus der nahezu horizontalen Sägeblattstellung in die Sägestellung einschwenken zu können.

Die Halteplatte 5 hat dabei einen eine Ausnehmung umschließenden Rahmen mit einer flachen Unterseite, wobei die Ausnehmung die Form und Größe der Außenkontur der Bodenplatte 2 der Stichsäge 1 hat, so dass die Stichsäge 1 darin aufgenommen und entlang der Linearführungsschiene 13 geführt werden kann. Am vorderen Ende der beiden längs der Seitenkanten der Ausnehmung verlaufenden Seitenflächen der Halteplatte 5 befinden sich zwei den Gelenkaugenabschnitten 9, 10 der an der Bodenplatte 2 der Stichsäge 1 zugeordnete Gelenkaugenabschnitte 6, 7, welche die Gelenkaugenabschnitte 9, 10 außenseitig überdecken und in einer Flucht mit diesen liegen. Zur Verbindung der Stichsäge 1 und der Halteplatte 5 über die Gelenkaugenabschnitte 6, 7, 9, 10 ist ein Schwenkbolzen 10 in die Gelenkaugen 6, 7, 9, 10 eingesteckt, welcher an seinem freien Ende ein Außengewinde trägt, dem ein Innengewinde in dem Gelenkauge 7 zugeordnet ist. An der anderen Seite des Schwenkbolzens 10 ist ein Handgriff 19 angebracht, um das Eindrehen zu erleichtern. Vorteilhaft weisen die nach vorne zeigenden Schenkel der Bodenplatte 2 an ihren Innenseiten dabei jeweils einander zugewandte Nuten auf, in die ein Splitterschutz für das Sägeblatt 4 eingesteckt sein kann.

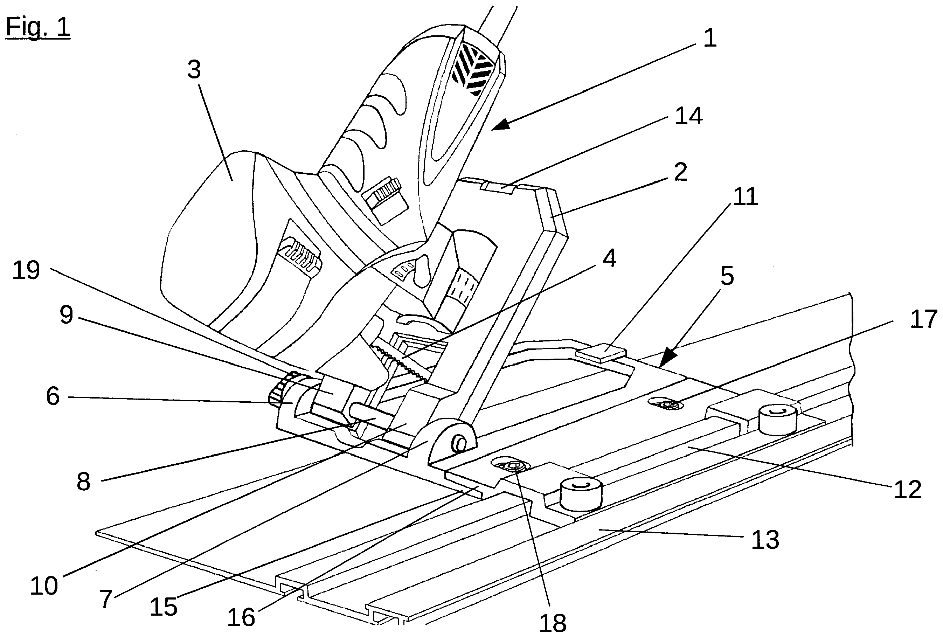

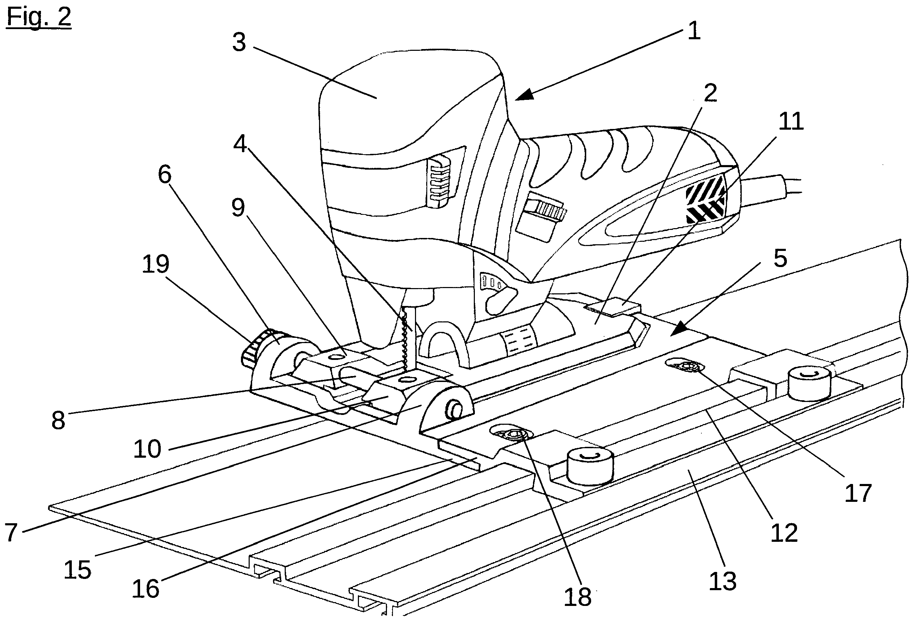

Soll nun ein Schnitt ins volle Material ohne Vorbohren durchgeführt werden, so wird die Säge 1 in der in Figur 1 gezeigten Stellung an das Werkstück angesetzt und dann in einer über die an der Führungsschiene 13 abgestützte Halteplatte 5 geführten Schwenkbewegung in die in Figur 2 gezeigte Sägestellung verschwenkt. Danach kann entlang der durch den Verlauf der Führungsschiene 13 definierten Schnittrichtung der gewünschte Schnitt durchgeführt werden. Kurz vor Erreichen der vollständig eingeschwenkten Sägestellung wird ein am hinteren Ende der Halteplatte 5 vorgesehener Riegel 11 nach hinten gezogen, so dass die Bodenplatte 2 daran vorbeigeführt werden kann. Danach wird der Riegel 11 wieder nach vorne bewegt und greift dann in eine zugeordnete Nut 14 an der oberen hinteren Kante der Bodenplatte 2 ein.

Soll die Stichsäge 1 dagegen an einer Werkstückkante ohne Einschwenkbewegung angesetzt werden, so kann auch zuerst mit ihrem hinteren Ende in die Ausnehmung in der Halteplatte 5 gesteckt werden und anschließend an ihrer Vorderseite über den Schwenkbolzen 10 fixiert werden.

Die Halteplatte 5 weist dabei entlang ihrer der Adapterplatte 12 zugewandten Seitenkante eine Befestigungslasche 15 auf, in der zwei Gewindebohrungen angebracht sind. Die Adapterplatte 12 übergreift auf ihrer der Halteplatte 5 zugewandten Seite die Befestigungslasche 15 der Halteplatte 5 mit einer eigenen Befestigungslasche 16, in der zwei in Querrichtung zur Schnittrichtung verlaufende, vorzugsweise als Stufenbohrung ausgebildete Langlöcher angebracht sind.

Die Halteplatte 5 und die Adapterplatte 12 können mit Schrauben 17, 18 an ihren Befestigungslaschen 15, 16 miteinander verschraubt werden. Wird die Linearführung über die Führungsschiene 13 nicht benötigt, sondern lediglich eine Führung bei der Einschwenkbewegung der Stichsäge 1 beim Sägen ins Volle ohne Vorbohren so kann die an der Halteplatte 5 montierte Stichsäge 1 auch ohne die Linearführungsschiene 13 und ohne die Adapterplatte 12 eingesetzt werden.

Die Verschraubung der Halteplatte 5 mit der Adapterplatte 12 über die durch die Langlöcher in der Befestigungslasche 16 der Adapterplatte 12 geführten Schrauben 17, 18 dient dabei als Feineinstellung für die Lage der Schnittlinie gegenüber der Führungsschiene. Man kann also die Führungsschiene 13 zunächst ungefähr auf der richtigen Querrichtungskordinate auflegen und dort befestigen und dann eine Feinjustage der Lage der Schnittlinie in Querrichtung zur Schnittlinie durch ein stückweises Verschieben der Halteplatte 5 vornehmen, bevor man die Schrauben 17, 18 festdreht. Lageabweichungen können sich z.B. aufgrund unterschiedlich dicker Sägeblätter etc. ergeben.

Besondere Vorteile ergeben sich dabei dann, wenn weitere Halteplatten für andere Werkzeuge vorgesehen sind, beispielsweise für Oberfräsen oder Tauchsägen, die dann an der sozusagen normierten Schnittstelle der Adapterplatte 12 befestigt werden können, wobei die Halteplatte für die unterschiedlichen Werkzeuge dabei so aufeinander abgestimmt sein könne, dass die Stützlinie der Werkzeuge in etwa auf der gleichen Querkoordinate liegt. Da die Querkoordinate aufgrund unterschiedlicher Sägeblattdurchmesser etc. aber nicht immer vollständig festlegbar ist, kann über die Feineinstellung die Schnittlinie des einen Werkzeugs dann genau auf die Schnittlinie des anderen Werkzeugs angepasst werden.

Wird z.B. entlang einer Schnittlinie mit einer Kreissäge vorgeschnitten und sollen im Eckbereich eines vorzunehmenden Schnitts die Reststege mit der Stichsäge 1 abgeschnitten werden, so kann die Lage des Sägeblatts 4 der Stichsäge 1 über die in den Langlöchern aufgenommenen Schrauben 17, 18 genau auf die Schnittlinie der zuvor verwendeten Kreissäge eingestellt werden. Selbstverständlich gehen die Langlöcher in der Befestigungslasche 16 der Adapterplatte 12 nicht auf ihrer gesamten Breite durch, sondern nur in einem Bereich, der dem Schraubendurchmesser entspricht, so dass die Schraubenköpfe zur Auflage kommen.

Abwandlungen und Modifikationen der Erfindung sind möglich, ohne den Rahmen der Erfindung zu verlassen.

So kann der bei einer Stichsäge üblicherweise vorhandene Pendelhub (in und entgegen der Schnittrichtung pendelnd) während der Einschwenkbewegung abgeschaltet bzw. abschaltbar sein.

## Patentansprüche

1. Stichsäge (1) mit einem auf einer Bodenplatte (2) aufgebauten Antriebsaggregat (3), von dem ein hin- und her bewegbares Sägeblatt (4) nach unten und in einem von der Bodenplatte (2) mehrseitig umschlossenen Bereich durch die Bodenplatte (2) hindurch geführt ist, wobei das Antriebsaggregat (3) ein Gehäuse aufweist, an dem zumindest ein Handgriff bzw. als Handgriff dienender Gehäuseabschnitt vorgesehen ist, und wobei
die Stichsäge (1) zum Eintauchen des Sägeblatts (4) ins Material aus einer Stellung mit nahezu horizontal geneigtem Sägeblatt (4) in einer geführten Schwenkbewegung unter Hineinarbeiten ins Material geeignet ist, wobei dazu eine Halteplatte (5) vorgesehen ist, welche mit der Bodenplatte (2) verbindbar ist, und wobei die Bodenplatte (2) einen Scharnierabschnitt (9, 10) aufweist und die Halteplatte (5) an ihrem in Schnittrichtung vorne gelegenen Bereich einen Gegenscharnierabschnitt (6, 7), an denen die Bodenplatte (2) scharnierartig mit Drehfreiheitsgrad um eine horizontale und quer zur Schnittrichtung verlaufende Schwenkachse mit der Halteplatte (5) verbindbar ist, **dadurch gekennzeichnet, dass** die Halteplatte (5) einen Handgriff und/oder eine Befestigungseinrichtung zur tischseitigen Fixierung aufweist, sowie eine Ausnehmung, in die die Bodenplatte (2) der Stichsäge (1) passt, und dass der Scharnierabschnitt (9, 10) an der in Schnittrichtung gelegenen Vorderseite der Bodenplatte (2) angeordnet ist.

2. Stichsäge (1) nach Anspruch 1, **dadurch gekennzeichnet, dass** der Scharnierabschnitt (9, 10) als Gelenkbolzenaufnahmeanordnung (9, 10) zur Aufnahme eines horizontal und quer zur Schnittrichtung einsteckbaren Gelenkbolzen (8) ausgebildet ist.

3. Stichsäge (1) nach Anspruch 2, **dadurch gekennzeichnet, dass** die Bodenplatte (2) den von dem Sägeblatt (4) durchdrungenen Bereich U-förmig umgibt und zwei den von dem Sägeblatt (4) durchdrungenen Bereich zu beiden Seiten begrenzende, mit ihren freien Enden nach vorne gerichtete Plattenschenkel aufweist, wobei der als Gelenkbolzenaufnahmeanordnung (9, 10) ausgebildete Scharnierabschnitt (9, 10) an den freien Enden der Plattenschenkel jeweils ein Gelenkauge (9, 10) zum Einstecken des Gelenkbolzens (8) aufweist.

4. Stichsäge nach Anspruch 1, 2 oder 3, **dadurch gekennzeichnet, dass** die Bodenplatte an ihrer Vorderkante abgerundet oder angefast ist und das Sägeblatt vorzugsweise ausgebaucht ausgebildet ist.

5. Stichsäge (1) nach einem der vorhergehenden Ansprüche, **dadurch gekennzeichnet, dass** die Bodenplatte (2) an ihrer in Schnittrichtung gelegenen Rückseite oben eine randseitige Schieberaufnahmenut (14) für einen an dem Halter (5) vorgesehen Riegel (11) aufweist.

6. Stichsäge (1) nach einem der vorhergehenden Ansprüche, **dadurch gekennzeichnet, dass , dadurch gekennzeichnet, dass** die Halteplatte (5) zwei die Ausnehmung für die Bodenplatte (2) der Stichsäge (1) zu beiden Seiten begrenzenden Plattenschenkel aufweist, die auf der Vorderseite der Halteplatte (5) und auf der Rückseite der Halteplatte querverbunden sind, wobei der Gegenscharnierabschnitt (6, 7) an einem vorderen Bereich der Plattenschenkel jeweils ein Gelenkauge (9, 10) zum Einstecken des Gelenkbolzens (8) aufweist

7. Stichsäge (1) nach Anspruch 6, **dadurch gekennzeichnet, dass** die Halteplatte (5) an ihrer rückseitigen Querverbindung einen oberseitig angebrachten Riegel (11) aufweisen kann, der in Schnittrichtung in und außer Eingriff mit der Schieberaufnahmenut (14) bringbar ist.

8. Stichsäge (1) nach Anspruch 6 oder 7, **dadurch gekennzeichnet, dass** die Befestigungseinrichtung zur tischseitigen Fixierung als zumindest an einer ihrer zur Schnittrichtung parallelen, einer Adapterplatte (12) zugewandten Seite zumindest eine quer zur Schnittrichtung auskragende Befestigungslasche (15) mit zumindest einer Bohrung ausgebildet ist.

9. Stichsägen-Linearführungsanordnung mit einer auf ein zu sägendes Werkstück auflegbaren Führungsschiene (13), einer auf der Führungsschiene (13) geführt aufgenommenen Adapterplatte (12), und einer an der Adapterplatte (12) befestigbaren Stichsäge (1), **dadurch gekennzeichnet, dass** eine Stichsäge (1) nach einem der Ansprüche 1 bis 8 vorgesehen ist, wobei die Halteplatte (5) der Stichsäge (1) und die Adapterplatte (12) zur Befestigung aneinander ausgebildet sind.

10. Stichsägen-Linearführungsanordnung nach Anspruch 9, **dadurch gekennzeichnet, dass** die Halteplatte (5) und die Adapterplatte (12) mit Verstellbarkeit der Lage der Halteplatte (5) zur Adapterplatte (12) quer zur Schnittrichtung aneinander befestigbar sind.

11. Stichsägen-Linearführungsanordnung nach Anspruch 10, **dadurch gekennzeichnet, dass** an einer zur Schnittrichtung parallelen, der Adapterplatte (12) zugewandten Seite der Halteplatte (5) zumindest eine quer zur Schnittrichtung auskragende Befestigungslasche (15) mit zumindest zwei Gewindebohrungen vorgesehen ist und an einer zur Schnittrichtung parallelen, der Halteplatte (5) zugewandten Seite der Adapterplatte (12) zumindest eine die zumindest eine Befestigungslasche (15) der Adapterplatte (12) übergreifende Gegenbefestigungslasche (16), die von mit den Gewindebohrungen an der zumindest einen Befestigungslasche (15) der Adapterplatte (12) korrespondierenden, quer zur Schnittrichtung verlaufenden Langlöchern durchdrungen ist, wobei die Adapterplatte (12) und die Halteplatte (5) mit die Langlöcher durchgreifenden, in die Gewindebohrungen eingreifenden Schrauben (17, 18) miteinander verschraubt sind.

## Claims

1. A jig saw (1) with a drive unit (3) built onto a bottom plate (2) from which a saw blade (4) movable back and forth is passed downwards through the bottom plate (2) and in an area enclosed multilaterally by the bottom plate (2), wherein the drive unit (3) comprises a housing on which at least a handle and/or a housing section serving as a handle is provided, and wherein
the jig saw (1) is suitable for immersing the saw blade (4) into the material from a position with almost horizontally inclined saw blade (4) in a guided swivel movement by working into the material,
wherein
a retaining plate (5) is provided for this purpose which can be connected with the bottom plate (2) and wherein
the bottom plate (2) comprises a hinge section (9, 10) and the retaining plate (5), on its area located in front in the cutting direction, a counter-hinge section (6, 7) on which the bottom plate (2) can be connected with the retaining plate (5) in a hinge-like manner with rotational degree of freedom around a horizontal swivel axis extending transversely to the cutting direction, **characterized in that** the retaining plate (5) comprises a handle and/or a fastening means for fixing on the table as well as a recess into which the bottom plate (2) of the jig saw (1) fits, and that the hinge section (9, 10) is located on the front side of the bottom plate (2) positioned in the cutting direction.

2. The jig saw (1) according to claim 1, **characterized in that** the hinge section (9, 10) is formed as a hinge pin receiving means (9, 10) for receiving a hinge pin (8) insertable horizontally and transversely to the cutting direction.

3. The jig saw (1) according to claim 2, **characterized in that** the bottom plate (2) surrounds the area penetrated by the saw blade (4) in a U-shaped manner, and comprises two plate legs limiting the area penetrated by the saw blade (4) on both sides, which plate legs are directed forwards with their free ends, wherein the hinge pin section (9, 10) being formed as hinge pin receiving means (9, 10) comprises on the free ends of the plate legs one hinge eye (9, 10) each for insertion of the hinge pin (8).

4. The jig saw (1) according to claim 1, 2 or 3, **characterized in that** the bottom plate on its front edge is rounded off or chamfered, and the saw blade is preferably formed in a bulging manner.

5. The jig saw (1) according to any one of the preceding claims, **characterized in that** the bottom plate (2) on its rear side located in the cutting direction comprises at the top a slider receiving groove (14) on the border for a latch (11) provided on the retainer (5).

6. The jig saw (1) according to any one of the preceding claims, **characterized in that** the retaining plate (5) comprises two plate legs limiting the recess for the bottom plate (2) of the jig saw (1) on both sides, which plate legs are transversely connected on the front side of the retaining plate (5) and on the rear side of the retaining plate, wherein the counter-hinge section (6, 7) on a front area of the plate legs comprises one hinge eye (9, 10) each for insertion of the hinge pin (8).

7. The jig saw (1) according to claim 6, **characterized in that** the retaining plate (5) at its cross connection on the rear side can comprise a latch (11) attached at the upper side which in the cutting direction can be engaged into and disengaged from the slider receiving groove (14).

8. The jig saw (1) according to claim 6 or 7, **characterized in that** the fastening means for fixing on the table is formed as at least one fastening strap (15) projecting transversely to the cutting direction with at least one bore and on at least one side, parallel to the cutting direction and facing the adapter plate (12).

9. A jig saw linear guiding means with a guide rail (13) to be put on a workpiece to be sawn, an adapter plate (12) received on the guide rail (13) in a guided manner, and a jig saw (1), which can be fixed on the adapter plate (12), **characterized in that** a jig saw (1) according to any one of claims 1 to 8 is provided, wherein the retaining plate (5) of the jig saw (1) and the adapter plate (12) are configured to be fastened to each other.

10. The jig saw linear guiding means according to claim 9, **characterized in that** the retaining plate (5) and the adapter plate (12) with adjustability of the position of the retaining plate (5) to the adapter plate (12) can be fixed to each other transversely to the cutting direction.

11. The jig saw linear guiding means according to claim 10, **characterized in that,** on a side of the retaining plate (5) parallel to the cutting direction and facing the adapter plate (12), at least a fastening strap (15) projecting transversely to the cutting direction with at least two threaded bores is provided, and on a side of the adapter plate (12) parallel to the cutting direction and facing the retaining plate (5), at least one counter-fastening strap (16) overlapping the at least one fastening strap (15) of the adapter plate (12), which counter-fastening strap is penetrated by oblong holes extending transversely to the cutting direction, which oblong holes correspond with the threaded bores on the at least one fastening strap (15) of the adapter plate (12), wherein the adapter plate (12) and the retaining plate (5) are screwed with each other by means of screws (17, 18) passing through the oblong holes and engaging into the threaded bores.

## Revendications

1. Scie sauteuse (1) comprenant un groupe d'entraînement (3) qui est monté sur une plaque de base (2) et par lequel une lame de scie (4) apte à être animée d'un mouvement de va-et-vient est menée vers le bas et à travers la plaque de base (2) dans une zone fermée de plusieurs côtés par ladite plaque de base (2), ledit groupe d'entraînement (3) présentant un boîtier sur lequel est prévue au moins une poignée ou bien une portion de boîtier faisant office de poignée, et dans laquelle ladite scie sauteuse (1) se prête à introduire la lame de scie (4) dans le matériau depuis une position où la lame de scie (4) est inclinée à peu près horizontalement, dans un mouvement de pivotement guidé, tout en travaillant dans le matériau, dans laquelle une plaque de maintien (5) est prévue à cette fin qui peut être reliée à la plaque de base (2), et dans laquelle la plaque de base (2) présente une portion à charnière (9, 10) et la plaque de maintien (5) présente une contre-portion à charnière (6, 7) sur sa zone située en avant dans la direction de coupe, sur lesquelles la plaque de base (2) peut être reliée à la manière d'une charnière à la plaque de maintien (5), avec un degré de liberté de rotation autour d'un axe de pivotement horizontal et s'étendant transversalement à la direction de coupe,
**caractérisée par le fait que** ladite plaque de maintien (5) présente une poignée et/ou un dispositif de fixation pour une fixation côté table, ainsi qu'un évidement dans lequel s'ajuste la plaque de base (2) de la scie sauteuse (1), et que la portion à charnière (9, 10) est disposée sur la face avant de la plaque de base (2), qui est située dans la direction de coupe.

2. Scie sauteuse (1) selon la revendication 1, **caractérisée par le fait que** ladite portion à charnière (9, 10) est réalisée comme ensemble de logement d'axe d'articulation (9, 10) destiné à loger un axe d'articulation (8) apte à être introduit horizontalement et transversalement à la direction de coupe.

3. Scie sauteuse (1) selon la revendication 2, **caractérisée par le fait que** la plaque de base (2) entoure en U la zone traversée par la lame de scie (4) et présente deux branches de plaque délimitant de part et d'autre la zone traversée par la lame de scie (4) et dont les extrémités libres sont dirigées vers l'avant, dans laquelle ladite portion à charnière (9, 10) réalisée comme ensemble de logement d'axe d'articulation (9, 10) présente, aux extrémités libres des branches de plaque, respectivement un oeil d articulation (9, 10) servant à introduire ledit axe d'articulation (8).

4. Scie sauteuse selon la revendication 1, 2 ou 3, **caractérisée par le fait que** la plaque de base est arrondie ou chanfreinée sur son arête avant et que la lame de scie est réalisée de préférence de manière bombée.

5. Scie sauteuse (1) selon l'une quelconque des revendications précédentes, **caractérisée par le fait que** la plaque de base (2) présente en haut, sur sa face arrière située dans la direction de coupe, une rainure de logement de verrou (14) marginale pour un verrou (11) prévu sur la plaque de maintien (5).

6. Scie sauteuse (1) selon l'une quelconque des revendications précédentes, **caractérisée par le fait que** la plaque de maintien (5) présente deux branches de plaque qui délimitent de part et d'autre l'évidement pour la plaque de base (2) de la scie sauteuse (1) et qui sont reliées transversalement sur la face avant de la plaque de maintien (5) et sur la face arrière de la plaque de maintien, dans laquelle ladite contre-portion à charnière (6, 7) présente, sur une zone avant des branches de plaque, respectivement un oeil d'articulation (9, 10) pour introduire l'axe d'articulation (8)

7. Scie sauteuse (1) selon la revendication 6, **caractérisée par le fait que** la plaque de maintien (5) peut présenter, sur sa liaison transversale arrière, un verrou (11) monté sur la face supérieure qui peut être mis en prise avec et hors prise de ladite rainure de logement de verrou (14) dans la direction de coupe.

8. Scie sauteuse (1) selon la revendication 6 ou 7, **caractérisée par le fait que** le dispositif de fixation pour la fixation côté table est réalisé, au moins sur une face parallèle à la direction de coupe et montrant vers une plaque adaptatrice (12), comme au moins une languette de fixation (15) ayant au moins un perçage, qui fait saille transversalement à la direction de coupe.

9. Ensemble de guidage linéaire de scie sauteuse comprenant une glissière (13) apte à être placée sur une pièce à scier, une plaque adaptatrice (12) reçue de manière guidée sur la glissière (13) et une scie sauteuse (1) fixable sur la plaque adaptatrice (12), **caractérisé par le fait qu'**une scie sauteuse (1) selon l'une quelconque des revendications 1 à 8 est prévue, dans lequel ladite plaque de maintien (5) de la scie sauteuse (1) et ladite plaque adaptatrice (12) sont réalisées pour être fixées l'une sur l'autre.

10. Ensemble de guidage linéaire de scie sauteuse selon la revendication 9, **caractérisé par le fait que** la plaque de maintien (5) et la plaque adaptatrice (12) peuvent être fixées l'une sur l'autre avec une réglabilité de la position de la plaque de maintien (5) par rapport à la plaque adaptatrice (12) transversalement à la direction de coupe.

11. Ensemble de guidage linéaire de scie sauteuse selon la revendication 10, **caractérisé par le fait que**, sur une face de la plaque de maintien (5) qui est parallèle à la direction de coupe et montre vers la plaque adaptatrice (12), au moins une languette de fixation (15) ayant au moins deux trous taraudés et en saillie transversalement à la direction de coupe est prévue, et que, sur une face de la plaque adaptatrice (12) qui est parallèle à la direction de coupe et montre vers la plaque de maintien (5), au moins une contre-languette de fixation (16) est prévue qui recouvre ladite au moins une languette de fixation (15) de la plaque adaptatrice (12) et qui est traversée par des trous oblongs correspondant aux trous taraudés sur ladite au moins une languette de fixation (15) de la plaque adaptatrice (12) et s'étendant transversalement à la direction de coupe, dans lequel ladite plaque adaptatrice (12) et ladite plaque de maintien (5) sont vissées entre elles par le biais de vis (17, 18) traversant les trous oblongs et s'engageant dans les trous taraudés.
